# EUROPEAN PATENT APPLICATION

(11) **EP 4 730 456 A1**
(43) Date of publication of application: **22.04.2026**
(21) Application number: 25202536.6
(22) Date of filing: 16.09.2025
(51) Int. Cl.: H01M 10/04, H01M 50/209, H01M 50/244, H01M 50/264, B32B 7/12, H01M 50/548

(54) **BATTERY MODULE**

(30) Priority: 15.10.2024 KR 20240140647
(71) Applicant: SAMSUNG SDI CO., LTD., Yongin-si, Gyeonggi-do 17084 (KR)
(72) Inventor: PARK, Jun Hwa, 16678 Suwon-si (KR); MOON, Dae Yon, 16678 Suwon-SI (KR); KIM, Beom Joo, 16678 Suwon-si (KR); KANG, Woong Jip, 16678 Suwon-si (KR); KIM, Sang Myeong, 16678 Suwon-si (KR); CHOI, Han Young, 16678 Suwon-si (KR)
(74) Representative: Marks & Clerk LLP

(57) **Abstract**

The present disclosure relates to a battery module, and the technical problem to be solve is to provide a battery module eliminating a pressure imbalance. To this end, the present disclosure provides a battery module, which includes a cell assembly comprising a plurality of battery cells; and a band that includes an elastic material, and surrounds the cell assembly while applying pressure, wherein each of the plurality of battery cells includes a case; and a pair of tabs extending from at least one side of the case and passing through the band.

## Description

### BACKGROUND

### 1. Field

The present disclosure relates to a battery module including a band.

### 2. Description of the Related Art

A battery cell can be charged and discharged. Low-capacity battery cells are used for portable small-sized electronic devices, such as smartphones, feature phones, notebook computers, digital cameras, and camcorders, and high-capacity battery cells are widely used as power sources for driving a motor and power storage batteries in hybrid vehicles and electric vehicles. Such a battery cell includes electrodes including a positive electrode and/or a negative electrode, an electrode assembly including the electrodes, a case that accommodates the electrode assembly, and electrode terminals connected to the electrode assembly.

As technology advances, battery cells with high capacity are required. Accordingly, a plurality of battery cells may be electrically connected and used. For example, the battery cells may be applied to an electronic device in the form of a battery module and/or a battery pack, which include(s) a plurality of battery cells. In this case, the electronic device is an electronic device that requires high power and/or high capacity and includes, for example, an electric vehicle.

The above-described information disclosed in the background technology of the present invention is merely intended to improve understanding of the background of the present invention and thus may include information that does not form the related art.

**SUMMARY** The present invention provides a battery module including a band that pressurizes a battery cell.

However, the problems to be solved by the present invention are not limited to the above-mentioned problems, and other problems not mentioned can be clearly understood by those skilled in the art from the following description.

To solve the above-described technical problems, there is provided a battery module according to one embodiment of the present invention including a cell assembly including a plurality of battery cells; and a band which includes an elastic material and surrounds the cell assembly while applying pressure, and each battery cell includes a case; and a pair of tabs which extends from at least one side of the case and passes through the band.

According to the present invention, a battery module which maintains a uniform pressure when pressure changes due to swelling during charging and discharging may be provided.

According to the present invention, a battery module with improved stability and/or an improved lifespan may be provided.

However, the effects to be obtained by the present invention are not limited to the above-mentioned problems, and other problems not mentioned can be clearly understood by those skilled in the art from the following description.

At least some of the above and other features of the invention are set out in the claims.

### BRIEF DESCRIPTION OF THE DRAWINGS

The following drawings appended to the present specification are intended to illustrate embodiments of the present invention, and the present invention will be more clearly understood from the accompanying drawings together with the following description of the invention, and thus the present invention should not be construed as being limited to matters described in such drawings, in which:
FIG. 1 is a perspective view that schematically illustrates a battery cell according to one embodiment of the present invention;
FIG. 2 is a front view that schematically illustrates a battery cell according to one embodiment of the present invention;
FIG. 3 is a perspective view that schematically illustrates a battery module according to one embodiment of the present invention;
FIG. 4 is a perspective view that schematically illustrates a battery module according to one embodiment of the present invention;
FIG. 5 is a perspective view that schematically illustrates a battery module according to one embodiment of the present invention;
FIG. 6A and 6B schematically illustrate a band according to one embodiment of the present invention;
FIG. 7A and 7B schematically illustrate a band according to one embodiment of the present invention;
FIG. 8 schematically illustrates a band according to one embodiment of the present invention;
FIG. 9 schematically illustrates a band according to one embodiment of the present invention; and
FIG. 10 schematically illustrates a band according to one embodiment of the present invention.

### DETAILED DESCRIPTION

Hereinafter, embodiments of the present invention will be described in detail. However, these embodiments are presented as examples, and the present invention is not limited thereby, and the present invention is only defined by the scope of the claims described below.

Unless otherwise specified herein, when a part such as a layer, a film, a region, or a plate is described as being "on" another part, this includes not only a case where the part is "directly on" another part, but also a case where still another part is present therebetween.

Unless otherwise specified herein, the singular expression may also include the plural. In addition, unless otherwise specified, "A or B" may mean "including A, including B, or including A and B."

As used herein, "a combination thereof" may mean a mixture, a laminate, a composite, a copolymer, an alloy, a blend, a reaction product, and the like of components.

Unless otherwise defined herein, the term "particle diameter" may refer to an average particle diameter. In addition, the particle diameter refers to an average particle diameter (D50), which means a diameter of particles with a cumulative volume of 50% by volume in a particle size distribution. The average particle diameter (D50) may be measured by a method well known to those skilled in the art, for example, by a particle size analyzer, or by a transmission electron micrograph or a scanning electron micrograph. Alternatively, after measuring using a measuring device using dynamic light scattering, performing data analysis, and counting the number of particles for each particle size range, the value of the average particle diameter (D50) may be calculated therefrom. Alternatively, the average particle diameter (D50) may be measured by a laser diffraction method. More specifically, when measured by the laser diffraction method, the average particle diameter (D50) may be measured by dispersing particles to be measured in a dispersion solvent and introducing the dispersed particles to a commercially available laser diffraction particle size measuring device (e.g., MT 3000 available from Microtrac, Ltd.) irradiating ultrasonic waves of about 28 kHz at a power of 60 W, and calculating an average particle diameter (D50) based on 50% of the particle diameter distribution in the measuring device.

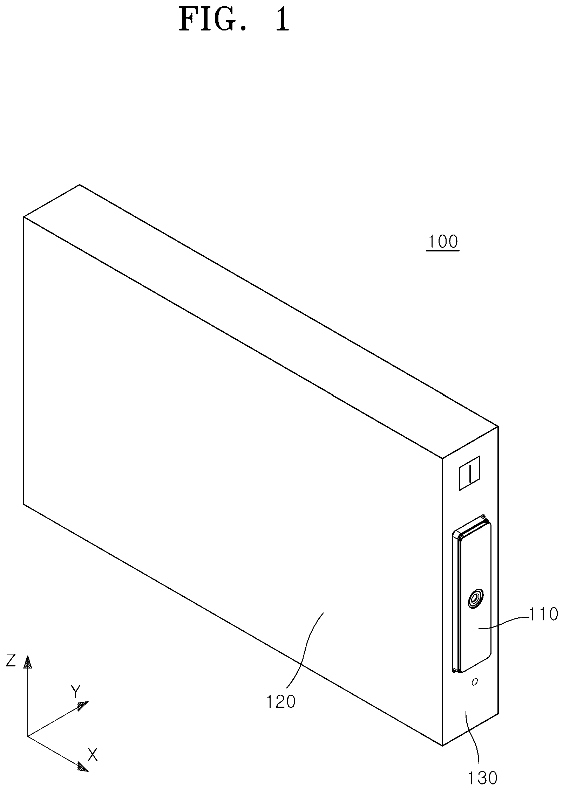

FIG. 1 is a perspective view that schematically illustrates a battery cell according to one embodiment of the present invention.

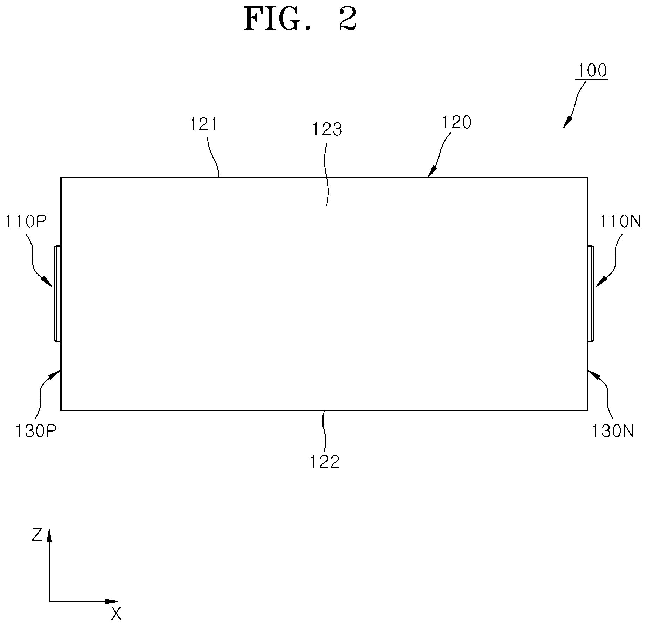

FIG. 2 is a front view that schematically illustrates a battery cell according to one embodiment of the present invention.

In FIGS. 1 and 2, 100 indicates a battery cell 100 according to one embodiment of the present invention. In addition, in FIGS. 1 and 2, the X axis represents the width direction of the battery cell 100, the Y axis represents the longitudinal direction of the battery cell 100 and the Z axis represents the height direction of the battery cell 100. Here, the X axis is perpendicular to the Y axis and the Z axis. Here, the Y axis is perpendicular to the X axis and the Z axis. Here, the Z axis is perpendicular to the X axis and the Y axis.

The battery cell 100 includes a case 120 and a pair of tabs 110 extending from at least one side of the case and passing through a band.

### Battery cell 100

The battery cell 100 may include an electrode assembly having a separator interposed between a positive electrode and a negative electrode, and a case 120 accommodating the electrode assembly. The positive electrode, the negative electrode, and the separator' may be impregnated with an electrolyte (not shown).

### Positive electrode active material

As a positive electrode active material, a compound (lithiated intercalation compound) which enables reversible intercalation and deintercalation of lithium may be used. Specifically, one or more of composite oxides of lithium and a metal selected from cobalt, manganese, nickel, and a combination thereof may be used.

The composite oxide may be a lithium transition metal composite oxide, and specific examples of composite oxide may include a lithium nickel-based oxide, a lithium cobalt-based oxide, a lithium manganese-based oxide, a lithium iron phosphate-based compound, a cobalt-free lithium nickel manganese-based oxide, or a combination thereof.

As an example, a compound represented by any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high-nickel-based positive electrode active material having a nickel content of 80 mol% or higher, 85 mol% or higher, 90 mol% or higher, 91 mol% or higher, 94 mol% or higher, and 99 mol% or less based on 100 mol% of the metal, except lithium, in the lithium-transition metal composite oxide. The high-nickel-based positive electrode active material may realize high capacity and thus can be applied to a battery cell with high capacity and high density.

### Positive electrode

The positive electrode for the battery cell 100 may include a current collector and a positive electrode active material layer formed on the current collector. The positive electrode active material layer may include a positive electrode active material, and further include a binder and/or a conductive material.

As an example, the positive electrode may further include an additive which may serve as a sacrificial positive electrode.

The content of the positive electrode active material may be 90 wt% to 99.5 wt% based on 100 wt% of the positive electrode active material layer, and the content of each of the binder and the conductive material may be 0.5 wt% to 5 wt% based on 100 wt% of the positive electrode active material layer.

The binder serves to adhere particles of the positive electrode active material to each other well, and adhere the positive electrode active material to the current collector well. Representative examples of binders may include polyvinyl alcohol, carboxymethyl cellulose, hydroxypropyl cellulose, diacetyl cellulose, polyvinylchloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, and nylon, but the present invention is not limited thereto.

The conductive material is used to provide conductivity to the electrode, and any electrically conductive material that does not cause a chemical change may be used in the configured battery. Examples of the conductive material may include a carbon-based material such as natural graphite, artificial graphite, carbon black, acetylene black, Ketjen black, carbon fibers, carbon nanofibers, or carbon nanotubes; a metal-based material in the form of a metal powder or metal fiber and containing copper, nickel, aluminum, or silver; a conductive polymer such as a polyphenylene derivative; or a mixture thereof.

As the current collector, Al may be used, but the present invention is not limited thereto.

### Negative electrode active material

The negative electrode active material may be a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. An example of crystalline carbon may be graphite such as amorphous, plate-shaped, flaky, spherical or fibrous natural or artificial graphite, and an example of amorphous carbon may be soft carbon or hard carbon, mesophase pitch carbide, or calcined coke.

The alloy of lithium and a metal may be an alloy of lithium and a metal selected from Na, K, Rb, Cs, Fr, Be, Mg, Ca, Sr, Si, Sb, Pb, In, Zn, Ba, Ra, Ge, Al, and Sn.

As the material capable of doping and dedoping lithium, a Si-based negative electrode active material or a Sn-based negative electrode active material may be used. The Si-based negative electrode active material may be silicon, a silicon-carbon composite, SiOₓ (0<x<2), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to one embodiment, the silicon-carbon composite may include silicon particles whose surface is coated with amorphous carbon. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer located on the surface of the core.

The Si-based negative electrode active material or Sn-based negative electrode active material may be used in combination with a carbon-based negative electrode active material.

### Negative electrode

The negative electrode of the battery cell 100 includes a current collector, and a negative electrode active material layer located on the current collector. The negative electrode active material layer may include a negative electrode active material, and further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

The binder serves to adhere particles of the negative electrode active material to each other well, and adhere the negative electrode active material to the current collector well. As the binder, a non-aqueous binder, an aqueous binder, a dry binder, or a combination thereof may be used.

The non-aqueous binder may be polyvinylchloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When an aqueous binder is used as the negative electrode binder, a cellulose-based compound that can impart viscosity may be further included. As the cellulose-based compound, one or more of carboxymethyl cellulose, hydroxypropylmethyl cellulose, methyl cellulose, and an alkali metal salt thereof may be used in combination. As the alkali metal, Na, K, or Li may be used.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The conductive material is used to provide conductivity to the electrode, and any electrically conductive material that does not cause a chemical change may be used in the configured battery. Specific examples of the conductive material may include a carbon-based material such as natural graphite, artificial graphite, carbon black, acetylene black, Ketjen black, carbon fibers, carbon nanofibers, or carbon nanotubes; a metal-based material in the form of a metal powder or metal fiber and containing copper, nickel, aluminum, or silver; a conductive polymer such as a polyphenylene derivative; or a mixture thereof.

The negative electrode current collector may be selected from copper foil, nickel foil, stainless steel foil, titanium foil, nickel foam, copper foam, a polymer substrate coated with a conductive metal, and a combination thereof.

### Electrolyte (not shown)

The electrolyte for the battery cell 100 includes a non-aqueous organic solvent and a lithium salt.

The non-aqueous organic solvent serves as a medium through which ions involved in the electrochemical reaction of the battery can move.

The non-aqueous organic solvent may be a carbonate-based solvent, an ester-based solvent, an ether-based solvent, a ketone-based solvent, an alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), ethyl methyl carbonate (EMC), ethylene carbonate (EC), propylene carbonate (PC), or butylene carbonate (BC) may be used.

As the ester-based solvent, methyl acetate, ethyl acetate, n-propyl acetate, dimethyl acetate, methyl propionate, ethyl propionate, decanolide, mevalonolactone, valerolactone, or caprolactone may be used.

As the ether-based solvent, dibutyl ether, tetraglyme, diglyme, dimethoxyethane, 2-methyltetrahydrofuran, 2,5-dimethyltetrahydrofuran, or tetrahydrofuran may be used. In addition, as the ketone-based solvent, cyclohexanone may be used. As the alcohol-based solvent, ethyl alcohol or isopropyl alcohol may be used, and as the aprotic solvent, a nitrile such as R-CN (where R is a linear, branched or cyclic hydrocarbon group having 2 to 20 carbon atoms, and includes a double bond, an aromatic ring, or an ether bond); an amide such as dimethyl formamide; a dioxolane such as 1,3-dioxolane and 1,4-dioxolane; or a sulfolane may be used.

The above-examples of non-aqueous organic solvents may be used alone or in combination of two or more thereof.

In addition, when a carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the organic solvent and serves as a source of lithium ions in a battery to enable the basic operation of a battery cell, and promotes the movement of lithium ions between positive and negative electrodes. Representative examples of lithium salts may include one or more selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CxF₂x+1SO₂)(CyF₂y+1SO₂) (where x and y are integers from 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Separator

Depending on the type of battery cell 100, the separator may be present between the positive electrode and the negative electrode. As the separator, polyethylene, polypropylene, polyvinylidene fluoride, or a multilayer film of two or more layers thereof may be used, and of course, a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator may include a porous substrate, and a coating layer including an organic material, an inorganic material, or a combination thereof located on one surface or both surfaces of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fiber, and polytetrafluoroethylene (e.g. Teflon), or a copolymer or a mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic and inorganic materials may be present as a mixture in one coating layer, or may be present in a form in which a coating layer containing an organic material and a coating layer containing an inorganic material are stacked.

The battery cell 100 according to one embodiment of the present invention includes an electrode assembly, a case 120, and/or a tab 110. The battery cell 100 may further include a pair of cap plates 130.

In FIGS. 1 and 2, a battery cell 100 having a prismatic shape is illustrated, but the shape of the battery cell 100 according to one embodiment of the present invention is not limited thereto. The battery cell 100 may be formed in any shape in which a pair of tabs extend from at least one side, and for example, the battery cell 100 may be pouch-shaped. Hereinafter, as a lithium-ion secondary battery, the battery cell 100 with a prismatic shape will be described as an example.

An electrode assembly includes a first electrode, a second electrode, and a separator disposed between the first electrode and the second electrode. The first electrode includes, for example, a positive electrode or a negative electrode. The second electrode includes, for example, a negative electrode or a positive electrode.

The electrode assembly is formed by stacking the first electrode, the second electrode, and the separator. For example, the electrode assembly may form a jelly-roll by winding the stacked first electrode, second electrode and separator. Alternatively, the electrode assembly may form a stack by stacking the first electrode, the second electrode, and the separator.

The case 120 forms the overall appearance of the battery cell 100. For example, the case 120 may include a conductive metal such as aluminum, an aluminum alloy, nickel-plated steel, stainless steel, SUS304, or carbon steel.

The case 120 may provide a space that accommodates an electrode assembly. Therefore, the case 120 accommodates the electrode assembly. The case 120 protects the electrode assembly from external impacts. The case 120 may perform a heat dissipation function to release heat resulting from the charge/discharge operation of the electrode assembly to the outside.

The case 120 includes a pair of narrow sides 121 and 122 and a pair of wide sides 123.

The pair of narrow sides 121 and 122 are formed facing each other. For example, the narrow sides include a first narrow side 121 and a second narrow side 122 facing the first narrow side 121. Each of the pair of narrow sides 121 and 122 may have, for example, a roughly rectangular plate shape. Here, the pair of narrow sides 121 and 122 may have, for example, similar or identical areas.

The pair of wide sides 123 are formed facing each other. In FIGS. 1 and 2, only one of the pair of wide sides 123 facing each other is illustrated. Each of the pair of wide sides 123 may have a roughly rectangular plate shape. Here, the pair of wide sides 123 may have, for example, similar or identical areas. Alternatively, the pair of wide sides 123 may be, for example, formed to have an area larger than at least one of the pair of narrow sides 121 and 122.

Each wide side 123 is connected to one edge of the narrow side 121 or 122. For example, an edge of one wide side 123 is connected to the first narrow side 121.

In addition, the other edge of the wide side 123 is connected to the second narrow side 122. In addition, for example, one edge of the other wide side 123 is connected to the first narrow side 121. In addition, the other edge of the wide side 123 is connected to the second narrow side 122. Due to this structure, the pair of narrow sides 121 and 122 and the pair of wide sides 123 may be connected to one another.

The case 120 has openings. For example, the case 120 may have a first opening provided at one side of the pair of narrow sides 121 and 122 and the pair of wide sides 123 and a second opening provided at the other side. The first opening and the second opening may be, for example, formed facing each other.

The pair of cap plates 130 may include a first cap plate 130P and a second cap plate 130N, facing each other.

Each cap plate 130 is combined with each opening. For example, the first cap plate 130P is combined with the first opening. In addition, for example, the second cap plate 130N is combined with the second opening.

The tabs 110 are electrically connected to the electrode assembly. The tabs 110 are exposed to the outside such that the electrode assembly can be electrically connected to the outside. For example, the tabs 110 are electrically connected to bus bars. The tabs 110 may be referred to as, for example, terminals. That is, the tabs 110 may include all components electrically connected to the electrode assembly and exposed to the outside of the secondary battery 100.

The tabs 110 include, for example, a first tab 110P and a second tab 110N. The first tab 110P is electrically connected to the first electrode. The second tab 110N is electrically connected to the second electrode.

The cap plate 130 may provide a space in which the tab 110 can protrude outside the battery cell 100. For example, the first tab 110P passes through the first cap plate 130P and is exposed to the outside. For example, the second tab 110N passes through the second cap plate 130N and is exposed to the outside.

Here, as shown in FIGS. 1 and 2, the first tab 110P and the second tab 110N may be exposed by extending in opposite directions. However, unlike those shown in FIGS. 1 and 2, the first tab 110P and the second tab 110N may be exposed by extending in the same direction. In this case, the cap plate 130 may include only one cap plate. Alternatively, the battery cell 100 may not include separate cap plates 130, and the first tab 110P and the second tab 110N may be exposed to the outside of the case 120. Here, the case 120 may be formed in a pouch shape.

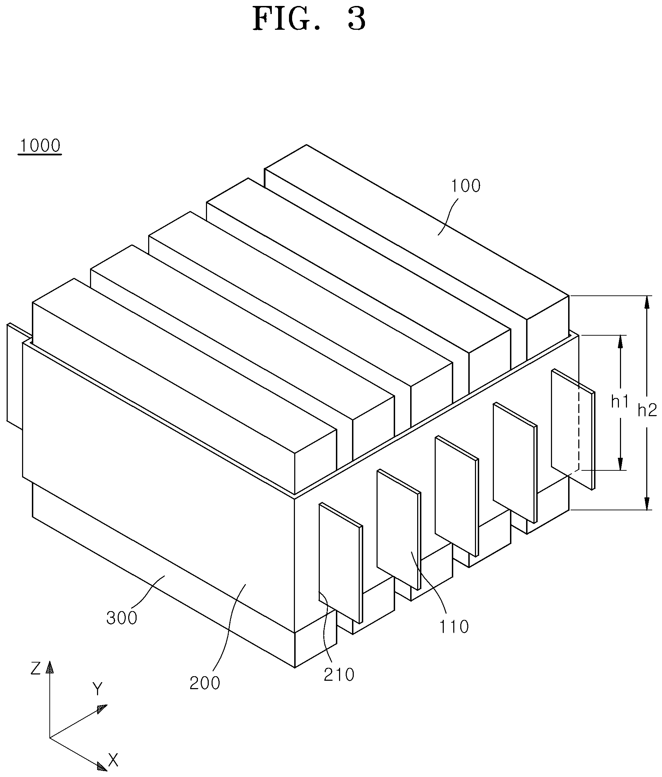

FIG. 3 is a perspective view that schematically illustrates a battery module according to one embodiment of the present invention.

The battery module 1000 according to one embodiment of the present invention includes a cell assembly 300 including a plurality of battery cells 100; and a band 200 that includes an elastic material and surrounds the cell assembly 300 while applying pressure.

The battery module 1000 includes a plurality of battery cells 100. The battery cell 100 may serve as a unit structure that stores and/or provides electrical power in the battery module 1000. Alternatively, the battery module 1000 includes one or more cell assemblies 300. Accordingly, the battery module 1000 may charge/discharge electrical energy with a higher capacity than a single battery cell 100.

The cell assembly 300 includes the plurality of battery cells 100.

The plurality of battery cells 100 are arranged, for example, in a longitudinal direction (Y). For example, the battery cell 100 includes a first side; and a second side, which face each other. Here, the first side and the second side include wide surfaces of the sides of the battery cell 100. For example, one of the plurality of battery cells 100 may be arranged such that the first side faces the second side of another battery cell adjacent to the corresponding battery cell. Here, the longitudinal direction (Y) may be a direction toward the second side from the first side. For example, the longitudinal direction (Y) may be a direction in which the greatest volume change of the battery cell 100 occurs when the battery cell 100 is swollen.

Meanwhile, in FIG. 3, an example of the battery module 1000 including one cell assembly 300 is illustrated, but the number of the cell assemblies 300 that can be included in the battery module 1000 is not limited thereto. For example, the battery module 1000 may include two or more cell assemblies 300. Here, one cell assembly 300 is a unit structure that includes a plurality of battery cells 100 and is pressed by one band 200. In addition, when the battery module 1000 includes a plurality of cell assemblies 300, although not illustrated, the battery module 1000 may further include an additional band that surrounds and pressurizes the plurality of cell assemblies 300. In addition, when the battery module 1000 includes a plurality of cell assemblies 300, the battery module 1000 may include a housing that accommodates the plurality of cell assemblies 300, and a method by which the battery module 1000 accommodates and/or binds the plurality of cell assemblies 300 is not limited.

The band 200 is provided to surround the cell assembly 300. For example, the band 200 is provided to surround at least a part of the sides of the cell assembly 300. For example, the band 200 surrounds the four directions of the sides of the cell assembly 300 and binds the plurality of battery cells 100 included in the cell assembly 300. Accordingly, the band 200 may bind the plurality of battery cells 100 to form the cell assembly 300.

In addition, the band 200 may pressurize the cell assembly 300. To this end, the band 200 includes an elastic material. For example, the band 200 may include an elastic material having a breaking strength of 50 MPa or higher.

To absorb and/or prevent swelling that occurs in the cell assembly 300, the elastic material has, for example, durability and/or elasticity. The elastic material includes, for example, at least one selected from the group consisting of a rubber, a polymer resin, a thermoplastic resin, a metal, and a combination thereof.

The rubber may include, for example, one or more selected from the group consisting of butadiene rubber, styrene butadiene rubber, acrylonitrile butadiene rubber, chloroprene rubber, polyisoprene rubber, an isobutylene isoprene copolymer, ethylene propylene rubber, an ethylene vinylacetate copolymer, chlorinated polyethylene, chlorosulfonated polyethylene, acrylic rubber, an ethylene acrylate copolymer, a fluoroelastomer, silicone rubber, a polyurethane elastomer, polyester polyurethane, polyether polyurethane, hydrogenated acrylonitrile-butadiene rubber, acrylonitrile-butadiene rubber, carboxylated acrylonitrile-butadiene rubber, and a combination thereof.

The polymer resin includes, for example, a synthetic fiber. The polymer resin may include, for example, one or more selected from the group consisting of a polyolefin-based resin, polyethylene, polypropylene, polyimide, polybutylene terephthalate, polytetrafluoroethylene, polystyrene, vinyl chloride, vinylidene chloride, a fluororesin, an acrylic resin, a polyvinyl acetate resin, a polyamide resin, polycarbonate, an acetal resin, polyphenylene oxide, polyester, polysulfone, nylon, and a combination thereof.

The metal may include, for example, one or more selected from the group consisting of SUS, titanium, aluminum, and an alloy thereof.

Meanwhile, for example, the band 200 may be formed so that the surface facing the cell assembly 300 is flat in correspondence with the cell assembly 300. To this end, the band 200 may be formed in a shape that is highly efficient to manufacture and can pressurize the cell assembly 300. Alternatively, for example, the band 200 may have pores, or may be formed in a mesh structure. Accordingly, the band 200 may more effectively absorb and/or prevent swelling.

Meanwhile, the band 200 is formed to have a first height (h1), and the cell assembly 300 is formed to have a second height (h2). Here, the height represents the distance in the height direction (z) of the corresponding component.

The first height (h1) is designed to be lower than the second height (h2). Alternatively, for example, the first height (h1) is designed to be 40% or more and 100% or less of the second height (h2). Alternatively, for example, the first height (h1) is designed to be 45% or more and 100% or less than the second height (h2). Alternatively, for example, the first height (h1) is designed to be 50% or more and 100% or less than the second height (h2). Alternatively, for example, the first height (h1) is designed to be 55% or more and 100% or less than the second height (h2). Alternatively, for example, the first height (h1) is designed to be 60% or more and 100% or less than the second height (h2). Alternatively, for example, the first height (h1) is designed to be 65% or more and 100% or less than the second height (h2). Alternatively, for example, the first height (h1) is designed to be 70% or more and 100% or less than the second height (h2).

When the first height (h1) is greater than 100% of the second height (h2), the capacity efficiency of the battery module 1000 may be reduced by the band 200. In addition, when the first height (h1) is less than 40% of the second height (h2), the band 200 may not provide a sufficient pressing force to the cell assembly 300.

Like this, the band 200 may be formed to cover (or extend over the length of) most of (or a significant proportion of) the region of the side of the cell assembly 300, and for example, the band 200 preferably has a height of 30% or more than the height of the cell assembly 300. In addition, the ratio of the region facing the band 200 to the entire region of the side of the cell assembly 300 may be 40% or more and 100% or less. Alternatively, for example, the ratio of the region facing the band 200 to the entire region of the side of the cell assembly 300 may be 50% or more and 100% or less. Alternatively, for example, the ratio of the region facing the band 200 to the entire region of the side of the cell assembly 300 may be 60% or more and 100% or less. Alternatively, for example, the ratio of the region facing the band 200 to the entire region of the side of the cell assembly 300 may be 70% or more and 100% or less.

Therefore, the band 200 may provide a sufficient pressing force to the cell assembly 300. In addition, the band 200 may provide a uniform pressing force to the cell assembly 300 in all directions.

Due to this structure, the battery module 1000 according to one embodiment of the present invention may prevent permanent deformation of the battery cell 100 and/or the battery module 1000 by swelling, and resolve various problems that occur due to a pressure imbalance.

In addition, the battery module 1000 may secure the plurality of battery cells 100 and/or the cell assembly 300 using the band 200, thereby fixing the plurality of battery cells 100 without an additional component such as a separate module case or plate. Accordingly, the battery module 1000 may provide a method of improving manufacturing efficiency and cost.

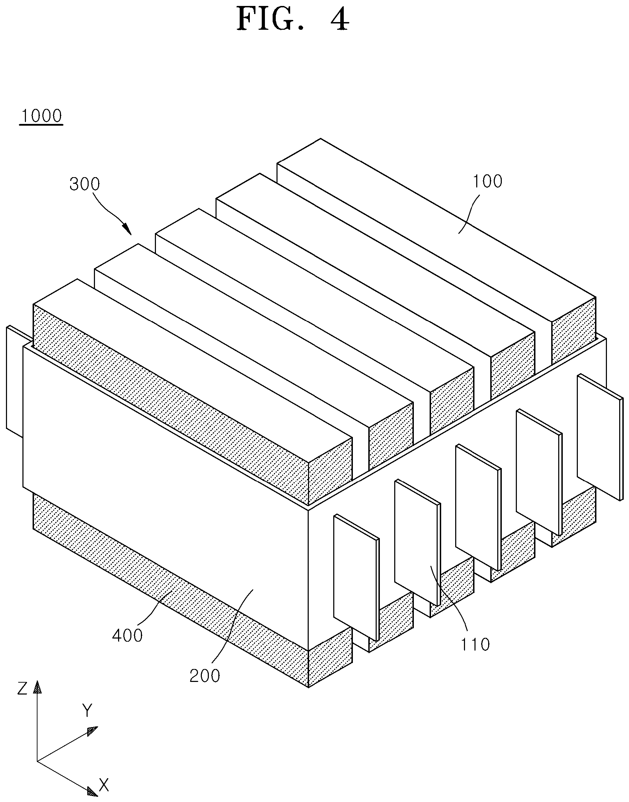

FIG. 4 is a perspective view that schematically illustrates a battery module according to one embodiment of the present invention.

The battery module 1000 according to one embodiment of the present invention includes a protective member 400 that is located between a cell assembly 300 and a band 200, and pressurizes the cell assembly 300.

The protective member 400 may protect the cell assembly 300 between the force of expansion of the inside of the cell assembly 300 and the pressing force on the outside of the cell assembly 300 by the band 200. For example, when the battery cell 100 has a pouch cell shape, the shape of the cell assembly 300 may be deformed by the pressing force of the band 200. The protective member 400 prevents the cell assembly 300 from being deformed by the pressing force of the band 200 while allowing the band 200 to absorb and/or prevent swelling of the cell assembly 300.

To this end, the protective member 400 has high flexural strength. For example, the protective member 400 has a flexural strength of 200 MPa or higher. Here, the flexural strength is based on ASTM D790. Therefore, even when a high mechanical load is applied to the cell assembly 300 by the band 200, the protective member 400 may effectively protect the cell assembly 300.

The protective member 400 may include, for example, a first material. For example, the first material my include fibers. Here, the fiber includes, for example, at least one or a mixture of at least two selected from the group consisting of fibrous inorganic materials, such as glass wool, rock wool, gypsum fiber, silica fiber, alumina fiber, zirconia fiber, and carbon fiber. Alternatively, the fiber includes, for example, at least one or a mixture of at least two selected from the group consisting of fibrous metal materials, such as gold, silver, iron, steel, aluminum, beryllium, tungsten, molybdenum, and stainless steel.

In addition, the protective member 400 may include, for example, a second material. For example, the second material includes at least one or a mixture of at least two selected from the group consisting of ABS, SAN, polystyrene, MPPO, polycarbonate, polysulfone, polyetherimide, polypropylene, polyethyene (HDPE), acetal, PBT, Nylon 6, Nylon 66, Nylon 46, Nylon 610, Nylon 612, Nylon 11, Nylon 12, amorphous nylon, polyetheretherketone, polyphenylene sulfide, and polyphthalamide (PPA).

In addition, the protective member 400 may include, for example, a mixture of the first material and the second material.

The protective member 400 may be formed, for example, in a plate shape. For example, the protective member 400 may be formed in a plate shape and interposed between the band 200 and the cell assembly 300. Alternatively, for example, the protective member 400 may be formed in a plate shape and fixed to the band 200 and/or the cell assembly 300.

In addition, or instead, the protective member 400 may be formed by coating the outer surface of the cell assembly 300. For example, the protective member 400 may be formed by coating at least a part of the outer surface of the cell assembly 300.

Here, for example, the protective member 400 may be formed corresponding to at least a part of the outer surface of the cell assembly 300, and/or formed by coating at least a part of the outer surface of the cell assembly 300. For example, the protective member 400 may be provided on the outer surface of the cell assembly 300 in a region wider than the band 200, but the size and/or area of the protective member 400 are not limited thereto.

In this way, the battery module 1000 according to one embodiment of the present invention may prevent the shape of the cell assembly 300 and/or the battery cell 100 included in the cell assembly 300 from being deformed by the band 200.

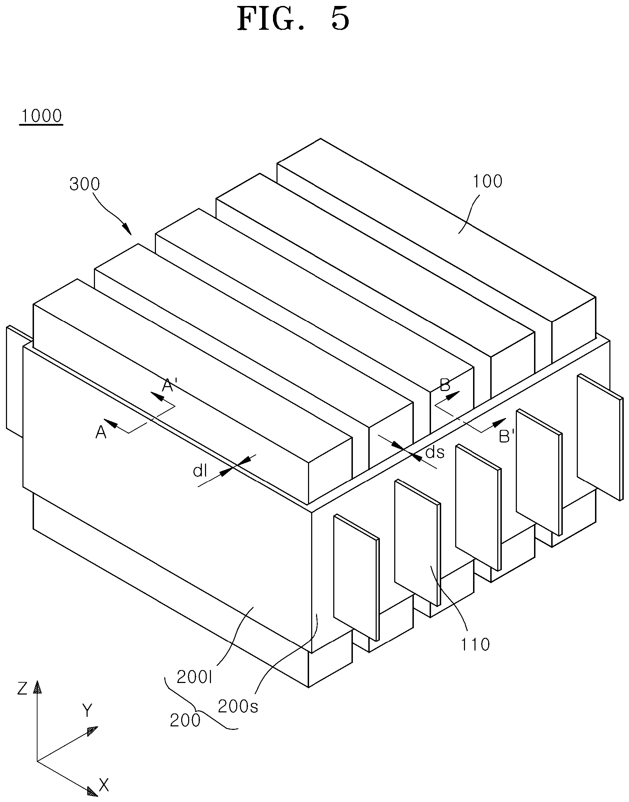

FIG. 5 is a perspective view that schematically illustrates a battery module according to one embodiment of the present invention.

A band 200 according to one embodiment of the present invention includes a pair of band short sides 200s covering at least a part of a pair of cap plates; and a pair of band long sides 200l that covers at least a part of wide sides and is connected to the pair of band short sides 200s.

The band 200 may be formed in an " 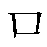 " shape, i.e. a rectangle in section, for example, when viewed from above. In this case, the band 200 may have the inner surface of each side of the " 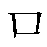 " shape facing the outer surface of a cell assembly 300. Alternatively, the band 200 may be formed in a circular, oval or irregular shape, for example, when viewed from above. In this case, the band 200 may be formed in a shape identical or similar to the " 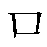 " shape by surrounding the cell assembly 300 and fitting the outer surface of the cell assembly 300.

For example, the band 200 includes a pair of band short sides 200s and a pair of band long sides 200l. Here, the pair of band short sides 200s may be formed facing each other. Here, the pair of band long sides 200l may be formed facing each other. Here, one band long side 200l may connect one side of one band short side 200s and one side of the other band short side 200s. Here, the other band long side 200l may connect the other side of the one band short side 200s and the other side of the other band short side 200s.

The band short side 200s surrounds one of the sides of a cell assembly 300. For example, as described above, the cell assembly 300 is formed by arranging the plurality of battery cells 100 in parallel. Accordingly, cap plates 130 included in the plurality of battery cells 100 are exposed at a pair of sides of the cell assembly 300 opposite to each other. The band short side 200s includes a region of the band 200, which covers the cap plates 130.

The band long side 200l surrounds one of the sides of the cell assembly 300. For example, as described above, the cell assembly 300 is formed by arranging the plurality of battery cells 100 in parallel. Therefore, at least two of the plurality of battery cells 100 form the front side of the cell assembly 300 and the back side of the cell assembly 300, respectively. For example, one wide side of the plurality of battery cells 100 forms the front side of the cell assembly 300. For example, the other wide side of the plurality of battery cells 100 forms the back side of the cell assembly 300. Here, the front and back sides of the cell assembly 300 include surfaces in the x-z plane, located opposite to each other. The band long side 200l includes a region of the band 200, which covers the wide side of the battery cell 100.

Since the band short side 200s is a region that covers the cap plate 130, it may receive stress from the tab 110. Accordingly, the band short side 200s needs to be designed with a higher strength than the band long side 200l.

Accordingly, the band short side 200s may be formed relatively thick. For example, the thickness (ds) of the band short side 200s is formed to be equal to or larger than the thickness (dl) of the band long side 200l. For example, the thickness (ds) of the band short side 200s may be formed to be 1 to 4 times the thickness (dl) of the band long side 200l. Alternatively, for example, the thickness (ds) of the band short side 200s may be formed to be 1.2 to 3.5 times the thickness (dl) of the band long side 200l. Alternatively, for example, the thickness (ds) of the band short side 200s may be formed to be 1.4 to 3 times the thickness (dl) of the band long side 200l. Alternatively, for example, the thickness (ds) of the band short side 200s may be formed to be 1.5 to 2.5 times the thickness (dl) of the band long side 200l.

Accordingly, the band 200 may uniformly pressurize the cell assembly 300 in consideration of the structure of the cell assembly 300. Hereinafter, examples of various structures will be described in consideration of the tab 110.

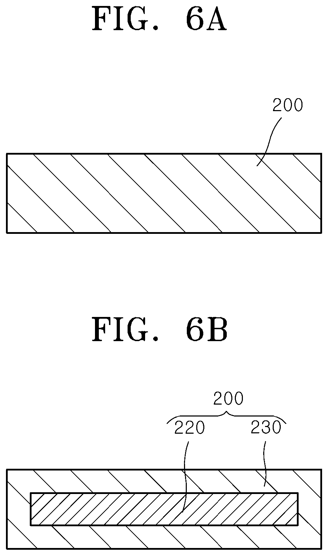

FIG. 6A and 6B schematically illustrate a band according to one embodiment of the present invention.

FIG. 6A is a cross-sectional view along A-A' in FIG. 5, and FIG. 6B is a cross-sectional view along B-B' of FIG. 5.

As illustrated in FIG. 5, the band 200 according to one embodiment of the present invention includes a band short side 200s and a band long side 200l. The band short side includes a center 220 including a first material; and an edge 230 that includes a second material with a smaller breaking strength than the first material and surrounds the center 220.

The center 220 is the inside of the band 200. For example, the center 220 is a part that is not exposed to the outside of the band 200. The center 220 contains the first material. The first material is a material with a relatively high breaking strength.

The edge 230 is the outside of the band 200. For example, the edge 230 is a part exposed to the outside of the band 200. For example, the edge 230 is a part that is provided at the outside of the center 220. The edge 230 includes the second material. The second material is a material with a relatively low breaking strength, and for example, the breaking strength of the second material is equal to or lower than that of the first material.

Here, the center 220 may be formed through a molding process such as compression molding, extrusion molding, injection molding, blow molding, and vacuum forming. The edge 230 may be formed through a molding process such as compression molding, extrusion molding, injection molding, blow molding, and vacuum forming. Alternatively, the edge 230 may be formed by being coated on the center 220.

Alternatively, the edge 230 may be formed to have a through hole through a molding process such as compression, extrusion, injection, blowing, or vacuuming. The center 220 may be formed through a molding process such as compression molding, extrusion molding, injection molding, blow molding, and vacuum forming. Alternatively, the center 220 may be formed through injection into the through hole formed in the edge 230.

Here, the band long side 200l may include a second material. That is, the band long side 200l may be formed of the same material as the edge 230.

Here, the breaking strength of the first material and the second material is 50 MPa or higher. Therefore, the breaking strength of the second material may be 50 MPa or higher, and the breaking strength of the first material may be equal to or higher than that of the second material.

Due to this structure, the band short side 200s is formed with a higher breaking strength than the band long side 220l. Therefore, the band 200 according to one embodiment of the present invention may improve the durability of the band 200, and provide a uniform pressing force to the cell assembly 300.

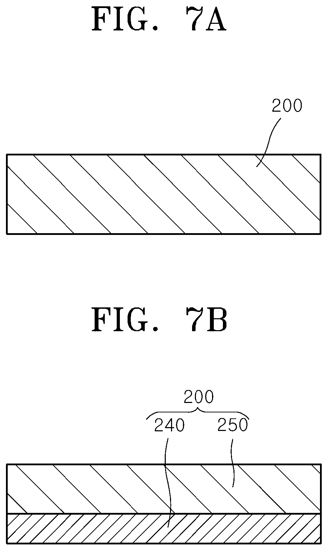

FIG. 7A and 7B schematically illustrate a band according to one embodiment of the present invention, and FIGS. 7A and 7B are cross-sectional views corresponding to FIGS. 6A and 6B, respectively.

As illustrated in FIG. 5, a band 200 according to one embodiment of the present invention includes a band short side 200s and a band long side 200l. The band short side 200s includes an inner part 240 that include a first material and faces the cell assembly 300; and an outer part 250 that includes a second material having a smaller breaking strength than the first material and is located outside the inner part 240.

The inner part 240 is the inner side of the band 200. For example , the inner part 240 is the part of the band 200 that faces the cell assembly 300. The inner part 240 includes a first material. The first material is a material having a relatively high breaking strength.

The outer part 250 is the outer side of the band 200. For example, the outer part 250 is the part of the band 200, which faces the opposite direction to the cell assembly 300. The outer part 250 includes a second material. The second material is a material having a relatively low breaking strength, and the breaking strength of the second material is equal to or lower than that of the first material.

Here, the inner part 240 may be formed through a molding process such as compression molding, extrusion molding, injection molding, blow molding, and vacuum forming. The outer part 250 may be formed through a molding process such as compression molding, extrusion molding, injection molding, blow molding, and vacuum forming. Here, the outer part 250 may be stacked on the inner part 240. For example, the outer part 250 may be fixed on the inner part 240 using an adhesive material. Alternatively, the outer part 250 may be formed by being coated on the inner part 240.

Meanwhile, the adhesive material may include an adhesive substance. For example, the adhesive substance may include at least one of a silicon-based resin, an acrylic resin, a urethane-based resin, a rubber-based resin, an epoxy resin, a polyolefin, and a combination thereof.

For example, the acrylic resin may include acryl, an ester copolymer, ethyl acrylate, butylacrylate, hexylacrylate, n-octylacrylate, isooctylacrylate, 2-ethylhexylacrylate, isononylacrylate, lauryl acrylate, acrylic acid, maleic acid, fumaric acid, itaconic acid, crotonic acid, acrylamide, N-vinylpyrrolidone, N-vinyl caprolactam, acrylonitrile, acryloyl morpholine, 2-hydroxylethyl acrylate, 2-hydroxypropyl acrylate, 2-hydroxybutylacrylate, etc.

For example, the urethane-based resin may include, for example, polyurethane.

For example, the rubber-based resin may include natural rubber, synthetic rubber, etc.

Here, the band long side 200l may include a second material. That is, the band long side 200l may be formed of the same material as the outer part 250.

Here, the breaking strength of the first material and the second material is 50 MPa or higher. Accordingly, the breaking strength of the second material may be 50 MPa or higher, and the breaking strength of the first material may be equal to higher than that of the second material.

Due to this structure, the band short side 200s is formed with a higher breaking strength than the band long side 220l. Therefore, the band 200 according to one embodiment of the present invention may improve the durability of the band 200, and provide a uniform pressing force to the cell assembly 300.

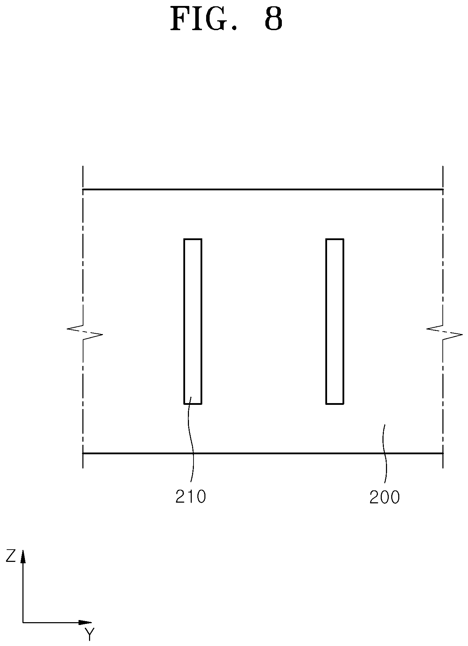

FIG. 8 schematically illustrates a band according to one embodiment of the present invention.

As illustrated in FIG. 5, a band 200 according to one embodiment of the present invention includes a band short side 200s and a band long side 200l. The band 200 may further include holes 210 that are formed in the band short side 200s and through which a pair of tabs 110 pass.

The holes 210 are formed through the band short side 200s. The holes 210 allow the tabs 110 to pass through the band short side 200s and be exposed to the outside.

The holes 210 may be formed corresponding to the size and./or shape of the tabs 110. For example, the tabs 110 may be formed in a rectangular shape, and in this case, the holes 210 may be formed in a rectangular shape corresponding to the shape of the tabs 110. Alternatively, for example, the tabs 110 may be formed in a thin plate shape, and in this case, the holes 210 may be formed in a thin slit shape through which the tabs 110 can pass. Alternatively, since the holes 210 may be formed to a size approximately larger than the tabs 110 so that the tabs 110 can pass through the holes 210 while the band 200 can evenly pressurize the cell assembly 300.

For example, as shown in FIG. 8, when a battery module 1000 is viewed in the y-z plane, the area of the hole 210 may be formed to be 1.01 to 2.00 times the area of the tab 110. Alternatively, for example, the area of the hole 210 may be formed to be 1.01 to 1.99 times the area of the tab 110. Alternatively, the area of the hole 210 may be formed to be 1.10 to 1.90 times the area of the tab 110.

Therefore, the band 200 according to one embodiment of the present invention may pressurize a cell assembly 300 while covering a cap plate 130 formed by protruding the tab 110. For example, even when the battery module 1000 includes a plurality of battery cells 100 having a side terminal structure, a method of pressurizing the cell assembly 300 using the band 200 is provided.

Hereinafter, examples of preventing the pressing force of the band 200 to the cell assembly 300 from being reduced or the band 200 from non-uniformly pressurizing the cell assembly 300 and/or improving the durability of the band 200 even when the band 200 includes the holes 210 will be described.

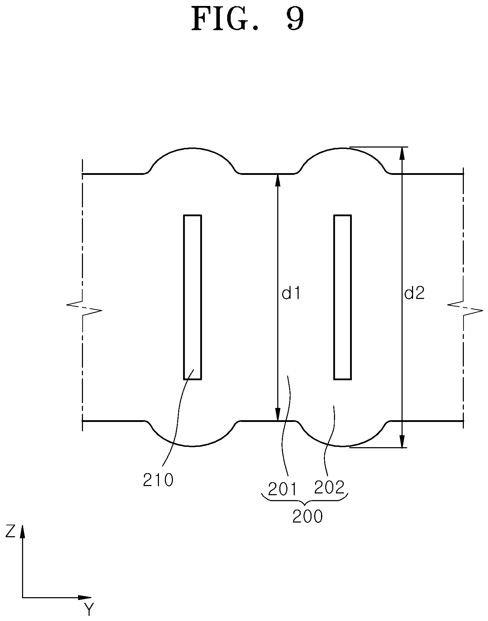

FIG. 9 schematically illustrates a band according to one embodiment of the present invention.

As illustrated in FIG. 9, for example, in a band short side 200s, a region in which a hole 210 is formed may be formed higher than a region in which a hole 210 is not formed.

Alternatively, although not illustrated in FIG. 9, for example, in the band short side 200s, the height (d2) of a hole adjacent part 202 which is adjacent to the hole 210 may be formed longer than the height (d1) of a hole non-adjacent part 201 which is not adjacent to the hole 210.

The band short side 200s includes the hole adjacent part 202 and the hole non-adjacent part 201.

The hole adjacent part 202 is a region in which the hole 210 is located in the height direction (z) in the band 200. For example, the hole adjacent part 202 includes regions corresponding to the portions above and below the hole 210 in the band 200. Here, the hole adjacent part 202 may further include regions on the left and/or right of the hole 210 in the band 200. The hole non-adjacent part 201 is a region in which the hole 210 is not located in the height direction (z) in the band 200.

When the holes 210 are formed in the band 200, the heights of the portions above and below the region in which the hole 210 is formed become thinner. The durability and pressing force may be different between the hole adjacent part 202 and the hole non-adjacent part 201 in the band 200.

Accordingly, the total height (d2) of the hole adjacent part 202 may be formed longer than the height (d1) of the hole non-adjacent part 201.

Due to this structure, a battery module 1000 may improve the durability of the band 200 in which the holes 210 are formed, and/or the band 200 may provide a uniform pressing force to the cell assembly 300.

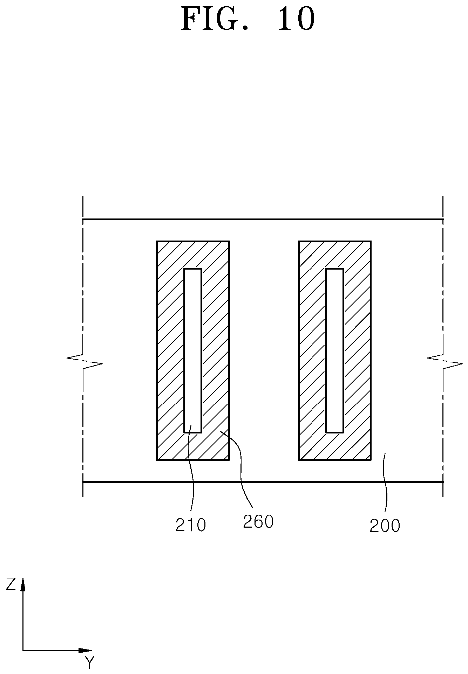

FIG. 10 schematically illustrates a band according to one embodiment of the present invention.

As illustrated in FIG. 10, for example, a band short side 200s may further include a finishing member 260 located adjacent to a hole 210.

The finishing member 260 prevents a force from being applied to a band 200 located adjacent to a tab 110, or it distributes any such force. Alternatively, for example, the finishing member 260 prevents a pressing force of the band 200 from being reduced by the hole 210.

To this end, the finishing member 260 is formed adjacent to the hole 210. For example, the finishing member 260 is formed on at least one of the upper, lower, left, and right sides of the tab 110 passing through the hole 210.

For example, the finishing member 260 is manufactured by molding. In this case, the finishing member 260 may be joined to the hole 210 and fixed to the band 200. Alternatively, the finishing member 260 may be formed by being coated on the band 200 adjacent to the hole 210. Alternatively, the finishing member 260 may be formed by being adhered to the band adjacent to the hole 210.

For example, the finishing member 260 includes one or more selected from the group consisting of a rubber, a polymer resin, a metal, and a combination thereof. Here, when the finishing member 260 is formed by being adhered to the band 200 adjacent to the hole 210, the finishing member 260 may further include an adhesive material that adheres the finishing member 260 to the band 200.

Due to this structure, a battery module 1000 may improve the durability of the band 200 in which the holes 210 are formed.

In FIGS. 8 to 10, examples of the holes 210 formed in the band short side 200s of the band 200 and the finishing member 260 for reinforcing the strength of the holes 210 are illustrated. However, the band 200 according to one embodiment of the present invention is not limited to the configurations shown in FIGS. 8 to 10.

For example, at least one of the examples illustrated in FIGS. 5 to 7B may be applied to the band short side 200s in which the holes 210 are formed. For example, the band short side 200s in which the holes 210 are formed may be formed thicker than the band long side 200l. Alternatively, for example, the band short side 200s in which the holes 210 are formed may include a center containing a first material and an edge containing a second material. Alternatively, for example, the band short side 200s in which the holes 210 are formed may include an inner part containing a first material and an outer part containing a second material.

In addition, at least one of the examples illustrated in FIGS. 5 to 7B and at least one of the examples illustrated in FIGS. 8 to 10 may be combined and applied. For example, the band short side 200s in which the holes 210 are formed may include a center containing a first material; an edge containing a second material; and a finishing member located adjacent to the hole.

Further, at least two of the examples illustrated in FIGS. 5 to 10 may be combined and applied. For example, in the band 200, the thickness of the band short side 200s is formed thicker than that of the band long side 200l, and the band short side 200s may include a center containing a first material and an edge containing a second material.

Due to this structure, the battery module 1000 according to one embodiment of the present invention may provide a method for maintaining a uniform pressure even when pressure is changed by swelling.

Although the present invention has been described with reference to limited embodiments and drawings, the present invention is not limited thereto, and it is obvious that various modifications and variations are possible within the scope of the technical idea of the present invention and the equivalent scope of the claims to be described below by those of ordinary skill in the art to which the present invention pertains.

## Claims

1. A battery module, comprising:
a cell assembly comprising a plurality of battery cells; and
a band that includes an elastic material, and surrounds the cell assembly while applying pressure,
wherein each of the plurality of battery cells comprises
a case; and
a pair of tabs extending from at least one side of the case and passing through the band.

2. The battery module of claim 1, wherein the case comprises a pair of narrow sides facing each other; and a pair of wide sides connecting the pair of narrow sides, and
the battery cell comprises a pair of cap plates which are connected to a first opening formed in one side of the case and a second opening formed in the other side of the case, and have a pair of protruding tabs.

3. The battery module of claim 2, wherein the band comprises a pair of band short sides covering at least a part of a pair of cap plates; and
a pair of band long sides covering at least a part of the wide sides and connected to the pair of band short sides.

4. The battery module of claim 3, wherein the band short side is formed to be thicker than the band long side.

5. The battery module of claim 3 or claim 4, wherein the band short side comprises a center including a first material; and
an edge including a second material having a lower breaking strength than the first material and surrounding the center.

6. The battery module of any one of claims 3 to 5, wherein the band short side comprises an inner part including a first material and facing the cell assembly; and
an outer part including a second material having a lower breaking strength than the first material, and located outside the inner part.

7. The battery module of any one of claims 3 to 6, wherein the band comprises holes which are formed in the band short side and through which the pair of tabs pass.

8. The battery module of claim 7, wherein, in the band short side, the region in which the hole is formed is formed higher than the region in which the hole is not formed.

9. The battery module of claim 7 or claim 8, wherein the band short side further comprises a finishing member located adjacent to the hole.

10. The battery module of any one of claims 7 to 9, wherein, in the band short side, the height of a hole adjacent part that is adjacent to the hole is formed longer than that of a hole non-adjacent part that is not adjacent to the hole.

11. The battery module of any one of the preceding claims, wherein the band is formed with a height of 40% or more of the height of the cell assembly.

12. The battery module of any one of the preceding claims, wherein the band comprises at least one selected from the group consisting of a rubber, a polymer resin, a metal, and a combination thereof.

13. The battery module of any one of the preceding claims, wherein the band has a breaking strength of 50 MPa or more.

14. The battery module of any one of the preceding claims, further comprising a protective member which is located between the cell assembly and the band and pressurizes the cell assembly.

15. The battery module of claim 14, wherein the protective member has a flexural strength of 200 MPa or more.
